# EUROPEAN PATENT APPLICATION

(11) **EP 2 595 070 A1**
(43) Date of publication of application: **22.05.2013**
(21) Application number: 12181185.5
(22) Date of filing: 21.08.2012
(51) Int. Cl.: G06F 17/30

(54) **OBJECT DATA SEARCH SYSTEMS AND METHODS**

(30) Priority: 17.11.2011 TW 100141979
(71) Applicant: Acer Incorporated, Taipei Hsien 221 (TW)
(72) Inventor: Chen, Lien-Wu, East Dist., Hsinchu City 300 (TW); Tseng, Yu-Chee, East Dist., Hsinchu City 300 (TW)
(74) Representative: 2K Patentanwälte Blasberg Kewitz & Reichel

(57) **Abstract**

An object data search system is provided. The object data search system includes a communication device and an identification device. The communication device includes a display processing unit and an information transceiver unit. The display processing unit displays a real-time image and retrieves an image screen showing a specific object from the real-time image. The information transceiver unit transmits the image screen retrieved by the display processing unit. The identification device receives the image screen transmitted by the information transceiver unit and performs an image identification operation to the received image screen to generate specific information corresponding to the specific object according to an identification result. Then, the identification device returns the specific information to the communication device. The communication device gets web information corresponding to the specific object by using an external search system, and the display processing unit displays the web information.

## Description

### CROSS REFERENCE TO RELATED APPLICATIONS

This Application claims priority of Taiwan Patent Application No. 100141979, filed on November 17, 2011, the entirety of which is incorporated by reference herein.

### BACKGROUND OF THE INVENTION

### Field of the Invention

The invention relates to an object data searching system and searching method, and more particularly to an object data searching system and searching method through image identification.

### Description of the Related Art

Currently, computers or communication devices, such as smart phones, are popular. Communication devices may perform searching of data through a wired or wireless network for solving problems of users. Thus, users often search for information by using communication devices.

In a current searching manner, users need to input keywords corresponding to objects in specific fields on search websites, and then search engines of the search websites perform a searching operation according to the keywords. Usually, when users see certain interested objects, users desire to search for information concerning the interested objects. At this time, even if the users can connect their communication devices to the search websites, the users may not search for the information of the interested objects on the current search websites under a condition that the users do not know the names or types of the interested objects.

In order to solve the above problems, providers of search websites offer search services based on pictures. When using the service in practice, users have to retrieve a static picture showing an interested object by an image capturing device conforming with the request and then upload the retrieved static picture to the search engine to activate the following search processes. Interested objects for users often appear in a dynamic video the users are watching. However, the dynamic video can not be uploaded to the search engine to activate the following search processes. Thus, the search services based on static pictures still do not satisfy requests of users.

Further, current search services based on pictures given by providers of search engines are performed by capturing pictures showing specific objects and obtaining keywords of the specific objects through picture identification, replacing the entering names or types of objects for searching. However, for current search services based on pictures, search processes can be performed only when one picture shows one object, and picture identification can be performed only on specific search engines.

U.S. patent application No. 20090319388 discloses a search manner based on picture identification. The search manner allows users to update a static picture of an object. However, the search manner can not be applied for identification of dynamic videos or a static picture or a dynamic video showing several objects. The U.S. patent application still does not solve the above problems.

### BRIEF SUMMARY OF THE INVENTION

In consideration of the drawbacks of the prior arts, the invention provides a search technique for static pictures and dynamic videos without entering any keywords by users.

An exemplary embodiment of an object data search system is provided. The object data search system may include a communication device and an identification device. The communication device may include a display processing unit and an information transceiver unit. The display processing unit is arranged for displaying a real-time image and retrieves an image screen showing a specific object from the real-time image. The information transceiver unit is arranged for transmitting the image screen retrieved by the display processing unit. The identification device is arranged for receiving the image screen transmitted by the information transceiver unit and performing an image identification operation to the received image screen to generate specific information corresponding to the specific object according to an identification result. Then, the identification device is arranged for returning the specific information to the communication device. The communication device gets web information corresponding to the specific object by using an external search system, and the display processing unit displays the web information.

In one embodiment, the external search system may include a search retrieving unit which retrieves the image screen showing the specific object from the real-time image according to an indication made by a user. The information transceiver transmits the image screen to the identification device.

An exemplarity embodiment of an object data search method is provided. The object data search method comprises the following steps of: (1) enabling a communication device to display a real-time image and retrieve an image screen showing a specific object from the real-time image according to an indication made by a user; (2) transmitting the image screen to an identification device; (3) enabling the identification device to receive the image screen, perform an image identification operation to generate specific information corresponding to the specific object according to an identification result, and return the specific information to the communication device; and (4) enabling the communication device to get web information corresponding to the specific object by using an external search system and displaying the web information.

In one embodiment, in the step (1), the image screen showing the specific object is retrieved from the real-time image by using a search retrieving unit built in the external search system.

Through the cooperation of the identification device and the display processing unit, and the information transceiver unit of the communication device, when a user watches a real-time image, such as a dynamic video or a static picture, and is interested in a specific object on the real-time image, the user can accomplish the search process based on the image screen of the specific object without entering any keywords. Moreover, the invention is not limited to a particularly search website. Users can designate a certain website which provides search services to perform the search process to specific objects, thereby obtaining web information corresponding to the specific objects.

Moreover, the invention is not limited to that the search process is performed only when a real-time image shows one single object. When a real-time image screen retrieved by the communication device shows several object images, the search process can be still performed to a specific object indicated by the user.

Compared with prior arts, the invention reduces the complexity of the search process to provide users more convenient search services.

A detailed description is given in the following embodiments with reference to the accompanying drawings.

### BRIEF DESCRIPTION OF THE DRAWINGS

The invention can be more fully understood by reading the subsequent detailed description and examples with references made to the accompanying drawings, wherein:

FIG. 1 shows an exemplary embodiment of an object data search system; and

FIG. 2 is a flow chart of an exemplary embodiment of an object data search method.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

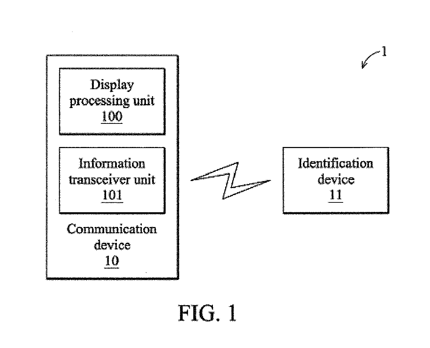

Object data search systems and methods are provided. In an exemplary embodiment of an object data search system shown in FIG. 1, an object data search system 1 comprises a communication device 10 and an identification device 11 communicating with the communication device 10 through a network system (not shown). The communication device 10 comprises a display processing unit 100 and an information transceiver unit 101. The communication device 10 may be a smart phone, a portable computer, or a personal digital assistant. The identification device 11 may be a cloud server.

The display processing unit 100 displays a real-time image and retrieves an image screen showing a specific object from the displayed real-time image. For example, the real-time image displayed by the display processing unit 100 may be a dynamic video or a static picture in digital formation or a dynamic video or a static picture previously stored by the communication device 10. When a user watches a specific object, which the user is interested in, on a dynamic video or a static picture displayed by the display processing unit 100, the user may input an instruction through a drag operation, point selection, or border selection. The display processing unit 100 then retrieves an image screen showing the specific object, which the user is interested in, from the dynamic video or the static picture according to the instruction.

The information transceiver unit 101 transmits the image screen showing the specific object retrieved by the display processing unit 100 according to the instruction. For example, the information transceiver unit 101 may be a wireless network transmission interface. When the specific object is selected, the information transceiver unit 101 transmits the image screen showing the specific object retrieved by the display processing unit 100 selectively through a 3G/4G mobile network system. In other embodiments, a search retriever unit (such as an icon diagram) of an external search system is dragged to a position of a specific object on a real-time image to retrieve an image screen and obtain a coordinate corresponding to the specific object. Then, the information transceiver unit 101 serving as a wireless network transmission interface transmits the image screen and the coordinate of the specific object.

The identification device 11 receives the image screen transmitted by the information transceiver unit 101. The identification device 11 performs an image identification operation to the received image screen selectively according to a related algorithm to generate specific information corresponding to the specific object, which the user is interested in, according to the identification result. Then, the identification device 11 returns the specific information to the information transceiver unit 101 of the communication device 10 through a network system, such as 3G/4G mobile network system. In the embodiment, the identification device 11 may have previously built a related image database. When receiving the image screen showing the specific object, the identification device 11 performs the image identification operation to the image screen according to images and data stored in the related image database. The identified specific information may serve as the name or type of the specific object which the user is interested in.

Further, when the information transceiver unit 101 receives the specific information from the identification device 11, the display processing unit 100 gets web information corresponding to the specific information by using an external search system and then displays the web information from the external search system. In the embodiment, the external search system may be a search engine built by a web search industry or an online delivery provider.

In detail, when the display processing unit 100 retrieves the image screen showing the specific object which the user is interested in, the display processing unit 100 also gets the coordinate position of the specific object on the retrieved image screen, for example one or more plane coordinates on the image screen. The information transceiver unit 101 transmits the image screen showing the specific object and the coordinate position of the specific object on the image screen to the identification device 11. Then, when the identification device 11 receives the image screen and gets the coordinate position, the identification device 11 retrieves an image of the specific object from the image screen according to the coordinate position. For example, the identification device 11 may retrieve one or more object images at long distances and short distances from the coordinate position. The identification device 11 performs the image identification operation according to the retrieved object image(s). Accordingly, even if the image screen from the information transceiver unit 101 shows several objects, the specific object which the user is interested in can be searched for accurately.

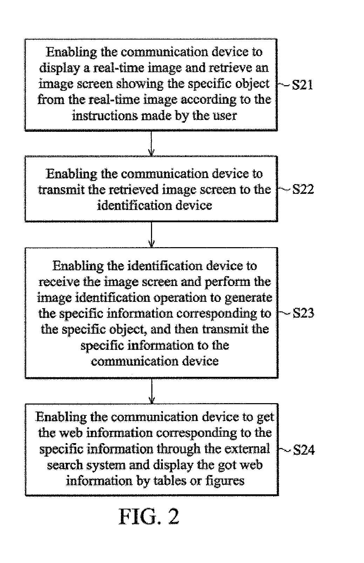

FIG. 2 shows a flow chart of an exemplary embodiment of an object data search method. The object data search method will be illustrated with the above description and FIG. 2.

In step S21, the communication device 10 is enabled to display a real-time image and retrieves an image screen showing the specific object from the real-time image according to the instructions made by the user. In the embodiment, the real-time image displayed by the display processing unit 100 may be a dynamic video or a static picture in digital formation or a dynamic video or a static picture previously stored by the communication device 10. Then, the object data search method proceeds to the step S22. In the step S22, the communication device 10 is enabled to transmit the retrieved image screen to the identification device 11. Then, the object data search method proceeds to the step S23. In the embodiment, in the step S21, the communication device 10 is further enabled to retrieve the image screen showing the specific object and get the coordinate position of the specific object on the image screen. Accordingly, in the step S22, the communication device 10 is enabled to transmit the retrieved image screen and the coordinate position of the specific object on the image screen to the identification device 11 by dragging the image screen to an external search system. In other embodiments, an execution program (such as an icon) of the external search system is dragged to a position of a specific object on a real-time image to retrieve an image screen and a coordinate corresponding to the specific object, and the image screen and the coordinate of the specific object is transmitted to the identification device 11.

In the step S23, the identification device 11 is enabled to receive the image screen and perform the image identification operation to generate the specific information corresponding to the specific object. Then, in the step S23, the identification device 11 further transmits the specific information to the communication device 10. The object data search method proceeds to the step S24. In this embodiment, the identification device 11 may perform the image identification operation to the image screen according to the image database which is previously built. The identified specific information is a name or type. Moreover, if the identification device 11 receives the image screen and the coordinate position at the same time, the identification device 11 may retrieve an image of the specific object from the image screen according to the coordinate position to perform the image identification operation to the specific object.

In the step S24, the communication device 10 is enabled to get the web information corresponding to the specific information through the external search system and display the got web information by tables or figures. In the embodiment, the external search system may be a search engine built by a web search provider or an online delivery provider.

According to the embodiment, when a user is interested in a specific object on a real-time image, the user can touch and press the position of the specific object on the real-time image, and then an icon of an external search system is dragged to the position of the specific object on the real-time image to accomplish input of instructions. At this time, the display processing unit 100 activates a backstage operation to accomplish a process of retrieving an image screen showing the specific object or getting a coordinate position of the specific object on the image screen. Then, the retrieved image screen and the coordinate position are transmitted to the identification device 11. After, the identification device 11 performs the image identification operation in real time and transmits identified specific information to the communication device 10. Accordingly, the communication device 10 accomplishes the search process indicated by the user based on the specific information by using an external search system, such as Google Search, ebay or Amazon. For example, the search process indicated by the user is performed to search and display the general price or auction price, the commentary, the related explanation, and sales locations of the specific object and further to compare sales prices of various industries for the specific object, thereby providing data reference for the user. Amazon is given as an example. The communication device 10 may search the content abstract, related explanation, general price or auction price, the publisher, author information of one specific book and further compare sales prices of various industries for the specific book.

In other words, when a user is interested in a specific object on a real-time image, it is convenient for the user to obtain requested web information related to the specific object only by performing a dragging operation to the specific object through a related touch displayer. The communication device 10 may be installed by a related application to assist the display processing unit 100 and the information transceiver unit 101 in performing a predetermined background operation. Moreover, a predetermined area for the dragging operation performed by the user is designed to comprise an icon representing the search engine of the external search system.

As the above described, through the cooperation of the identification device, the display processing unit, and the information transceiver unit, when a user watches a real-time image, such as a dynamic video or a static picture, the user can directly drag an image screen of a specific object which the user is interested in to a specific area. Then, the information search of the specific object is accomplished by performing the image identification operation based on the image screen of the specific object, so that the search processing of the detailed information the specific objection becomes faster, simpler, and more convenient. Compared with prior arts, the invention reduces the complexity of the search process to provide users more convenient search services.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. An object data search system, comprising:
a communication device, comprising:
a display processing unit, arranged for displaying a real-time image and retrieving an image screen showing a specific object from the real-time image; and
an information transceiver unit, arranged for transmitting the image screen retrieved by the display processing unit; and
an identification device, arranged for receiving the image screen transmitted by the information transceiver unit, performing an image identification operation to the received image screen to generate specific information corresponding to the specific object according to an identification result, and returning the specific information to the communication device,
wherein the communication device gets web information corresponding to the specific object by using an external search system, and the display processing unit displays the web information.

2. The object data search system as claimed in claim 1, wherein when the display processing unit retrieves the image screen, the display processing unit gets a coordination position of the specific object on the image screen, and the information transceiver unit transmits the image screen and the coordinate position to the identification device.

3. The object data search system as claimed in claim 2, wherein when the identification device receives the image screen and the coordinate position, the identification device retrieves an image of the specific object from the image screen according to the coordinate position and performs the image identification operation to the image of the specific object.

4. The object data search system as claimed in any of the claims 1 to 3, wherein the real-time image is a dynamic video or a static picture in digital formation.

5. The object data search system as claimed in any of the claims 1 to 4, wherein the real-time image is a dynamic video or a static picture which were previously stored by the communication device.

6. The object data search system as claimed in any of the claims 1 to 5, wherein the identification device performs the image identification operation to the image screen according to a predetermined image database.

7. An object data search method, comprising:
(1) enabling a communication device to display a real-time image and retrieve an image screen showing a specific object from the real-time image according to an indication made by a user;
(2) transmitting the image screen to an identification device;
(3) enabling the identification device to receive the image screen, perform an image identification operation to generate specific information corresponding to the specific object according to an identification result, and return the specific information to the communication device; and
(4) enabling the communication device to get web information corresponding to the specific object by using an external search system and displaying the web information.

8. The object data search method as claimed in claim 7, wherein the step (1) further comprises enabling the communication device to retrieve the image screen and get a coordination position of the specific object on the image screen, and the step (2) further comprises enabling the communication device to transmit the image screen and the coordinate position to the identification device.

9. The object data search method as claimed in claim 8, wherein in the step (3), the identification device is enabled to receive the image screen and the coordinate position and retrieve an image of the specific object from the image screen according to the coordinate position to perform the image identification operation to the image of the specific object.

10. The object data search method as claimed in any of the claims 7 to 9, wherein in the step (1), the real-time image is a dynamic video or a static picture in digital formation.

11. The object data search method as claimed in any of the claims 7 to 10, wherein in the step (1), the real-time image is a dynamic video or a static picture which were previously stored by the communication device.

12. The object data search method as claimed in any of the claims 7 to 11, wherein in the step (3), the identification device is enabled to perform the image identification operation to the image screen according to a predetermined image database.
